# EUROPEAN PATENT SPECIFICATION

(11) **EP 4 190 733 B1**
(45) Date of publication and mention of the grant of the patent: **12.11.2025**
(21) Application number: 21306713.5
(22) Date of filing: 06.12.2021
(51) Int. Cl.: B65H 54/76, B65H 75/36, B65H 75/42, B25J 5/00, B25J 11/00, B63B 35/04

(54) **CABLE-COILING SYSTEM**
KABELAUFWICKELSYSTEM
SYSTÈME D'ENROULEMENT DE CÂBLE

(43) Date of publication of application: 07.06.2023
(73) Proprietor: Alcatel Submarine Networks, 91620 Nozay (FR)
(72) Inventor: ABRIAL, Francois-Xavier, 28700 BLEURY (FR); CHOQUEL, Guillaume, 62720 RINXENT (FR); BAREZZANI, Michele, 91190 SAINT-AUBIN (FR)
(74) Representative: Loyer & Abello

(56) References cited:
- WO-A1-2020/161482
- DE-A1- 19 835 711
- JP-A- 2000 184 540
- EIJI ARAKI ET AL: "CABLE LOADING SYSTEM FOR SUBMARINE CABLE CONSTRUCTION. \THE SUBMARINE CABLE LOADING SYSTEM", JAPAN TELECOMMUNICATION REVIEW, TELECOMMUNICATIONS ASSOCIATION. TOKYO, JP, vol. 5, no. 1, 1 January 1993 (1993-01-01), pages 89 - 92, XP000338582, ISSN: 0915-2334

## Description

### BACKGROUND

### Field

Various example embodiments relate to cable-handling equipment, and more specifically but not exclusively, to equipment for coiling communications cables.

### Description of the Related Art

A submarine communications cable is a cable laid on or buried under the seabed between landing stations to carry telecommunication signals across stretches of ocean and/or sea. Such a cable may comprise one or more optical fibers capable of transporting optical data signals over large distances. The optical fibers are typically covered with silicone gel and then sheathed in various layers of polyethylene, steel wiring, copper, and polypropylene to provide insulation and shielding and to protect the fibers from possible physical damage.

Submarine communications cables are laid using ships designed and/or modified specifically for that purpose. Such ships can typically carry thousands of kilometers of cable out to sea, laying the cable-plant infrastructure on the seabed. Special subsea ploughs may be used to trench and bury the cables along the seabed, e.g., in areas relatively close to shorelines where naval activities, such as anchoring and fishing, are prevalent and present a damage danger to the cables.

Publications JP2000184540, WO 2020161482, DE19835711 and EIJI ARAKI ET AL: "CABLE LOADING SYSTEM FOR SUBMARINE CABLE CONSTRUCTION. \THE SUBMARINE CABLE LOADING SYSTEM", JAPAN TELECOMMUNICATION REVIEW, TELECOMMUNICATIONS ASSOCIATION illustrate the technological background of the present invention.

### SUMMARY OF SOME SPECIFIC EMBODIMENTS

Disclosed herein are various embodiments of an automated system for coiling a large (e.g., > 1000 km) length of cable in a cable tank. In an example embodiment, the system comprises a gantry positioned above the cable tank and a swarm of cable-handling robots deployed on the floor of the cable tank. The gantry operates to controllably move a touchdown point of the cable, which is being fed into the cable tank by a cable engine. Each of the cable-handling robots is equipped with a rake that can be used to push or pull downed sections of the cable on the floor of the cable tank. An electronic controller operates to control the speed of the cable engine and movements of the gantry and individual cable-handling robots to coil the cable in the tank in spirally wound, vertically stacked layers.

Different embodiments of the automated cable-coiling system may be adapted for use at the cable factory and on board a cable-laying ship.

According to the invention, provided is an apparatus, comprising: a movable head to guide a hanging section of a cable; a plurality of movable robots, each of the robots having one or more rakes for moving downed sections of the cable; and an electronic controller to coordinate movements of the movable head and individual ones of the robots to coil the cable in spirally wound, vertically stacked, horizontal layers.

According to the invention, provided is also an automated cable-coiling method, comprising the steps of: guiding a hanging section of a cable using a movable head; moving downed sections of the cable using rakes of a plurality of movable robots; and coordinating movements of the movable head and individual ones of the robots using an electronic controller to coil the cable in spirally wound, vertically stacked, horizontal layers.

### BRIEF DESCRIPTION OF THE DRAWINGS

Other aspects, features, and benefits of various disclosed embodiments will become more fully apparent, by way of example, from the following detailed description and the accompanying drawings, in which:
FIG. 1 shows a three-dimensional perspective view of a cable tank using which at least some example embodiments may be practiced;
FIGs. 2A-2C show side, top, and cross-sectional aft views, respectively, of an example cable-laying ship that can be equipped with the cable tank of FIG. 1;
FIG. 3 shows a block diagram of an automated cable-coiling system according to an embodiment;
FIG. 4 shows a schematic top view of a portion of the automated cable-coiling system of FIG. 3 according to an embodiment;
FIGs. 5A-5B show example cross-sectional views of a partially filled cable tank used in the automated cable-coiling system of FIG. 4 according to an embodiment;
FIG. 6 shows a schematic three-dimensional perspective view of a cable-handling robot that can be used in the automated cable-coiling system of FIG. 3 according to an embodiment;
FIG. 7 schematically shows different operating zones for the cable-handling robot of FIG. 6 in the cable tank of FIG. 1 according to an embodiment; and
FIG. 8 schematically illustrates a variable number of cable-handling robots that may be actively engaged in cable coiling in the automated cable-coiling system of FIG. 3 according to an embodiment.

### DETAILED DESCRIPTION

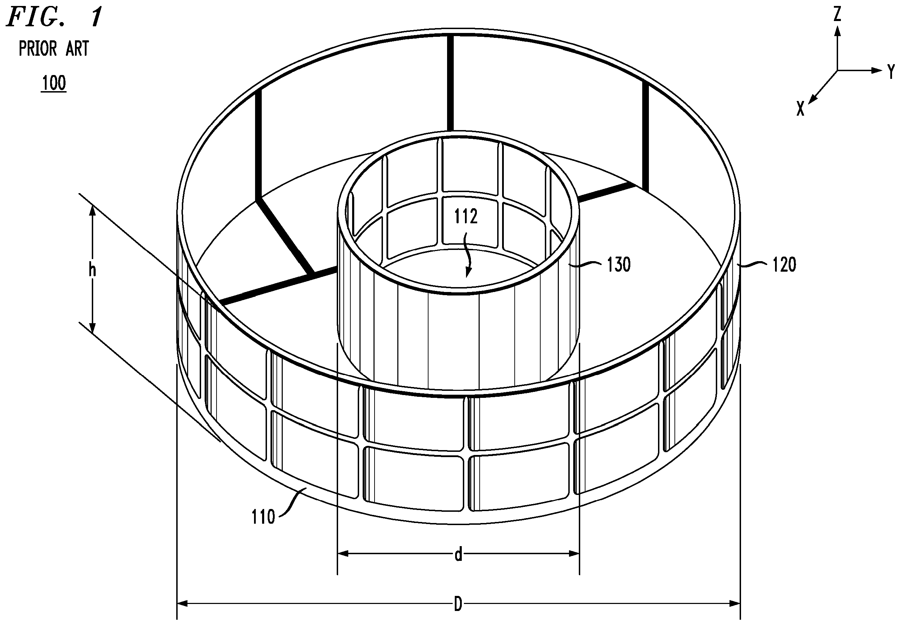

FIG. 1 shows a three-dimensional perspective view of a cable tank **100** using which at least some example embodiments may be practiced. Cable tank **100** comprises a base **110** having a substantially planar top surface and a generally circular shape with a circular opening **112** in the middle thereof. In the shown view, the top surface of base **110** is parallel to the XY-plane of the shown XYZ-coordinate triad. Cable tank **100** further comprises: (i) an outer circular (e.g., cylindrical) wall **120** attached to an outer edge of base **110,** and (ii) an inner circular (e.g., cylindrical) wall **130** attached to base **110** at the perimeter of circular opening **112.** Circular walls **120** and **130** are typically coaxial. The center axis of circular walls **120** and **130** is parallel to the Z-axis of the shown XYZ-coordinate triad. The height of the walls **120** and **130** is denoted as *h.* The outer diameter of planar base **110** is denoted as *D.* The diameter of circular opening **112** is denoted as *d.* In an example embodiment, cable tank **100** may have the following approximate sizes: *h* = 10 m; *d* = 5 m; and *D* = 15 m. In alternative embodiments, cable tank **100** may have other sizes, e.g., selected to accommodate the desired length of cable therein. For example, such cable length may be in the range between 500 km and 5000 km.

In some embodiments, inner wall **130** may be tilted toward opening **112,** i.e., may have a conical shape.

Cable tanks similar to cable tank **100** may be used at factories during the cablemanufacturing process and on cable-laying ships.

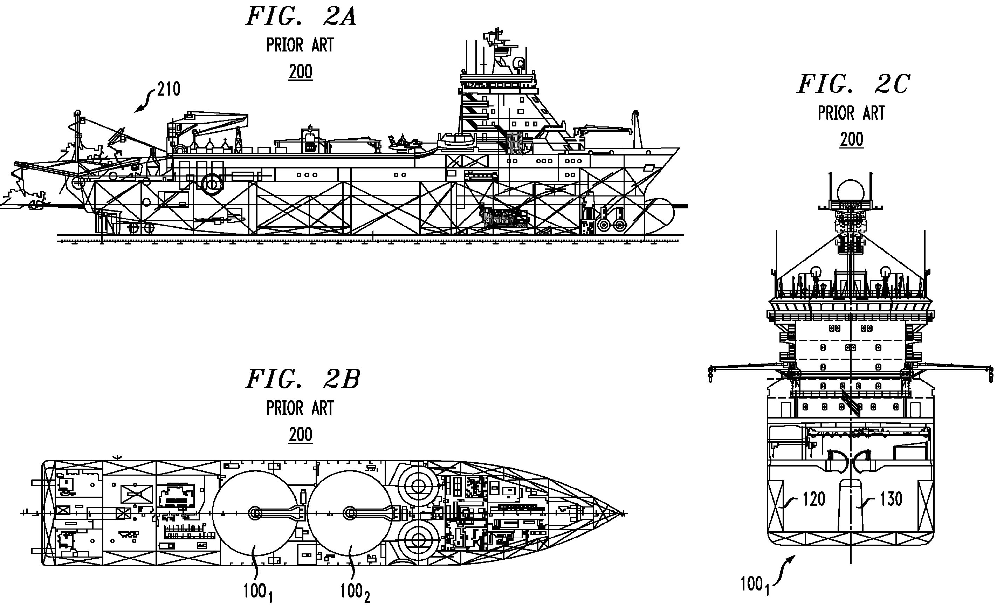

FIGs. 2A-2C show side, top, and cross-sectional aft views, respectively, of an example cable-laying ship **200** equipped with two cable tanks **100,** which are labeled **100₁** and **100₂**. Cable-laying ship **200** may typically have a tonnage of over 10,000 tons. In some variants, cable-laying ship **200** may carry one or more than two cable tanks **100.** As shown, cable-laying ship **200** may be capable of laying more than one line of underwater cable at the same time. In addition to cable tanks **100₁** and **100₂,** cable-laying ship **200** may typically have a system **210** of stern sheaves designed to facilitate the cable-laying operation. After cables are loaded into the cable tanks **100₁** and **100₂** of cable-laying ship **200,** e.g., at the port of origination, the ship may head out to sea to carry out cable installation. During such cable installation, the cable(s) may be fed out of cable tank(s) **100,** through stern sheaves **210,** and into a subsea plough (not explicitly shown in FIG. 2) for being buried in the seabed.

Submarine cables are typically manufactured at highly specialized factories, via a production flow, which may run continuously, 24 hours a day, for a number of weeks. During various production phases, the cable may be fed into a cable tank, e.g., similar to cable tank **100,** for coiling therein by a team of human workers. On the same cable length, the coiling operation may need to be performed several times, e.g., once at each one of the manufacturing, integration, and ship-loading steps. When performed in a conventional manner, such coiling operations may disadvantageously be very time-consuming, tedious, and manual-labor intensive. For example, musculoskeletal disorders are not infrequent in workers involved in such coiling operations.

At least some of the above-indicated problems in the state of the art can beneficially be addressed using at least some embodiments of the automated cable-coiling system disclosed herein. Example benefits of this system may include significant reduction in the amount of manual labor and, in at least some cases, a higher speed of the coiling operation compared to that of manual coiling.

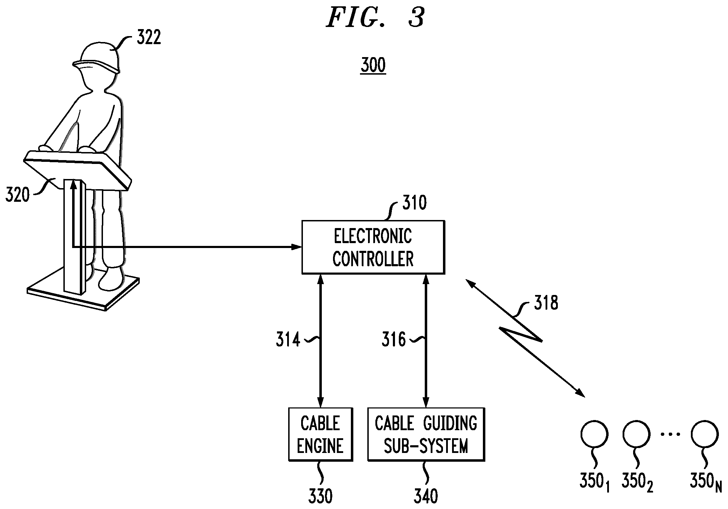

FIG. 3 shows a block diagram of an automated cable-coiling system **300** according to an embodiment. System **300** comprises an electronic controller **310** operatively connected to control a cable engine **330,** a cable-guiding sub-system **340,** and cable-handling robots **350₁-350_{N}.** In an example embodiment, the number N depends on the dimensions of the used cable tank **100** and can be, e.g., in the range between 4 and 20. System **300** further comprises a human-machine interface (HMI) **320** that can be used, e.g., to communicate to a human operator **322** various configuration parameters and/or the operating status of different parts of the system. HMI **320** may also be used to enable human operator **322** to manually enter certain commands, to stop and resume the cable-coiling process, and/or to change certain configuration parameters of system **300.** In an example embodiment, electronic controller **310** may communicate with cable engine **330** and cable-guiding sub-system **340** using wireline connections **314** and **316,** respectively, and with cable-handling robots **350₁-350_{N}** using wireless links **318.**

Cable engine **330** may comprise a motor and one or more cable-feeding sheaves for longitudinally moving (e.g., translating, pulling) the cable from a cable source toward cable tank **100** for being coiled therein. Cable-guiding sub-system **340** may operate to guide a hanging section of the cable to a proper touchdown point inside cable tank **100.** The touchdown point may typically be continuously moving, e.g., approximately on a circular trajectory inside cable tank **100.** Cable-handling robots **350₁-350_{N}** may operate to: (i) arrange the downed sections of the cable in spiral loops, e.g., such that a next loop of the cable is in direct physical contact with the previous loop thereof; and (ii) keep one or more edge cable loops in a proper position until those cable loops are stabilized and locked therein by the subsequently laid cable loops.

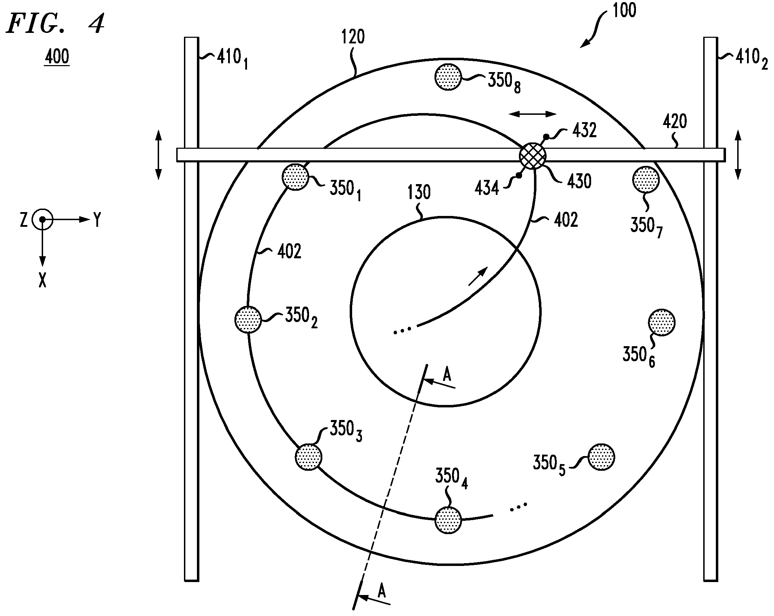

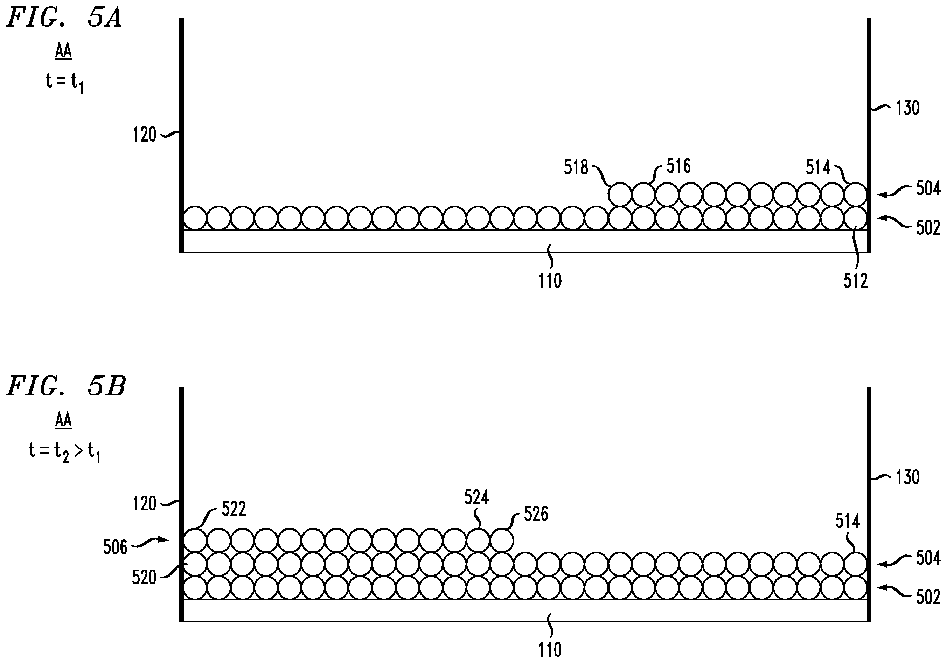

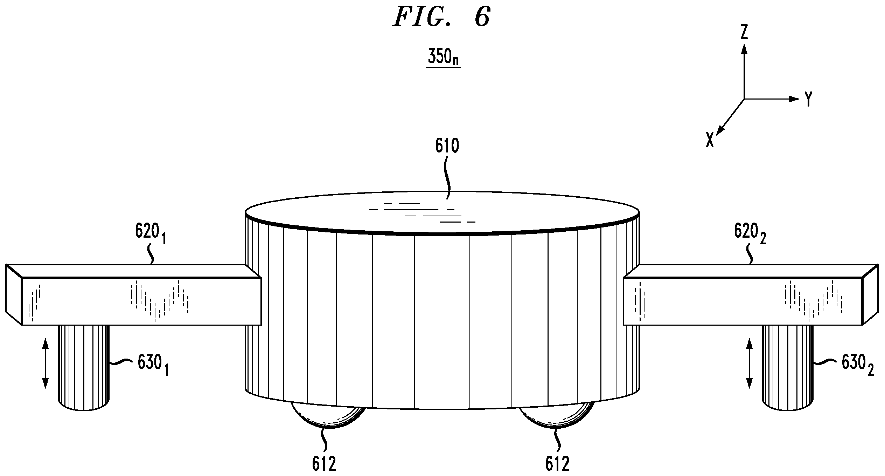

Example embodiments of cable-guiding sub-system **340** and cable-handling robot **350ₙ** (n=1, 2, ..., N) are described in more detail below in reference to FIGs. 4 and 6. Example movements of cable-handling robots **350₁-350_{N}** during cable coiling are described in more detail below in reference to FIGs. 5-8.

Different suitable embodiments of system **300** may be used for cable coiling at the cable factory and on the deck of cable-laying ship **200.**

FIG. 4 shows a schematic top view of a portion **400** of system **300** according to an embodiment. Portion **400** includes cable tank **100** (also see FIG. 1) in which a cable **402** is being coiled. Only a relatively short section of cable **402** is explicitly shown in FIG. 4 for illustration purposes. In some cases, cable **402** may be pre-torqued during production, e.g., for being coiled in the clockwise direction. As already indicated above, the full length of cable **402** can be, e.g., > 1000 km. The XYZ-coordinate triad shown in FIG. 4 has the same orientation with respect to cable tank **100** as that shown in FIG. 1.

Herein, the term "horizontal" refers to a direction or plane that is substantially (e.g., to within 20 degrees) parallel to the XY-coordinate plane. The term "vertical" refers to a direction that is substantially (e.g., to within 20 degrees) parallel to the Z-coordinate. For example, the force of gravity may be vertical.

An example coiling operation is typically directed at placing cable **402** inside cable tank **100,** e.g., by spirally winding the cable in a clockwise direction, about inner circular wall **130** (also see FIG. 1). The spiral winding may produce spirally wound, horizontal layers of cable **402,** which are vertically stacked, starting from the first layer laid on the top surface of base **110,** with subsequent layers progressing toward the top of cable tank **100,** preferably without holes, crossings of the cable in the radial direction, or other winding imperfections.

In the shown embodiment, system **300** comprises stationary rails **410₁** and **410₂** positioned above cable tank **100,** i.e., at a suitable height above base **110** thereof that is greater than the height *h* of the walls **120. 130** (also see FIG. 1). System **300** further comprises a rail **420** movably mounted on stationary rails **410₁** and **410₂**. Rail **420** may be oriented approximately orthogonally with respect to rails **410₁** and **410₂**, as indicated in FIG. 4.

In operation, rail **420** can be translated along stationary rails **410₁** and **410₂** parallel to the X-coordinate axis as indicated by the double-headed arrows shown in FIG. 4 next to the ends of rail **420.** In an example embodiment, such translation of rail **420** can be performed, e.g., by moving rail **420** along stationary rails **410₁** and **410₂** on track wheels or rollers using an electric motor (not explicitly shown in FIG. 4). Electronic controller **310** may control the position of rail **420** on stationary rails **410₁**, **410₂**, e.g., by controlling the electric motor via control link **316** (also see FIG. 3).

System **300** further comprises a cable-guiding head **430** movably mounted on rail **420.** In operation, cable-guiding head **430** can be translated along rail **420** parallel to the Y-coordinate axis as indicated by the double-headed arrow shown in FIG. 4 next to the cable-guiding head. In an example embodiment, such translation of cable-guiding head **430** can be performed, e.g., by moving the cable-guiding head along rail **420** on rail wheels using another electric motor (not explicitly shown in FIG. 4). Electronic controller **310** may control the position of cable-guiding head **430** with respect to rail **420,** e.g., by controlling the corresponding electric motor via control link **316** (also see FIG. 3). Thus, by moving rail **420** along stationary rails **410₁**, **410₂** and by moving cable-guiding head **430** along rail **420,** system **300** can controllably position cable-guiding head **430** directly over any area of base **110** of cable tank **100.**

In different embodiments, the rails **410₁**, **410₂**, and **430** may be implemented as parts of a gantry, a gantry crane, or an overhead crane.

In an example embodiment, cable-guiding head **430** has a cable-feedthrough channel, e.g., a ring, through which cable engine **330** can advance new sections of cable **402** toward cable tank **100.** The cable-feedthrough channel may typically have an inner diameter that may be slightly larger than the diameter of cable **402.** Such inner diameter may be selected such as to sufficiently laterally confine the cable without hindering the flow thereof through the channel or damaging the cable's exterior.

Cable-guiding head **430** also has cable-positioning sensors **432, 434** mounted thereon. In operation, cable-positioning sensors **432, 434** provide, e.g., via control link **316,** appropriate cable telemetry to electronic controller **310** to enable system **300** to autonomously and controllably move the touchdown point of cable **402** across the floor of cable tank **100** while new sections of the cable are being fed through cable-guiding head **430** by cable engine **330.** Such telemetry may monitor the catenary shape of the hanging section of cable **402.** Based on the input received from cable-positioning sensors **432, 434,** electronic controller **310** may appropriately operate the above-mentioned electric motors, thereby moving rail **420** and cable-guiding head **430** to correspondingly move the touchdown point of cable **402** along a suitable trajectory inside cable tank **100.** When needed, electronic controller **310** can adjust the catenary shape, e.g., by changing the linear speed with which cable engine **330** dispenses cable **402** and/or the speed, position, and/or trajectory of cable-guiding head **430.**

The embodiment shown in FIG. 4 corresponds to N=8, i.e., there are eight cable-handling robots **350ₙ,** which are labeled **350₁-350₈**. In an example embodiment, a cable-handling robot **350ₙ**. may be equipped with one or more rakes capable of catching, keeping, holding, pushing, and pulling sections of cable **402.** In operation, each cable-handling robot **350ₙ** may: (i) move to a floor position specified by electronic controller **310;** (ii) use on-board positioning sensors to determine its position within cable tank **100** and report the determined position back to electronic controller **310;** (iii) use on-board cable-reconnaissance sensors to detect a section of cable **402** to be handled; (iv) hook, grab, or engage the cable section; (v) disengage from the cable section as may be needed; (vi) move along the radial direction toward outer wall **120** or toward inner wall **130** of cable tank **100;** (vii) move laterally along the downed sections of cable **402** as needed; and (viii) push or pull a section of cable **402** in the radial direction. Cable-handling robots **350₁-350_{N}** may perform some of these actions on the cable sections autonomously, while electronic controller **310** may individually control some other actions of individual ones of cable-handling robots **350₁-350_{N}** via respective control links **318.** The different actions of cable-handling robots **350₁-350_{N}** may typically be coordinated and directed at properly advancing the cable-coiling operation. An example embodiment of cable-handling robot **350ₙ**. is described in more detail below in reference to FIG. 6.

FIGs. 5A-5B show example cross-sectional views of a partially filled cable tank **100** used in the automated cable-coiling system **300** of FIG. 4 according to an embodiment. Each of the shown cross-sectional views corresponds to a cross-sectional plane **AA** indicated in FIG. 4. FIG. 5A corresponds to a first time, *t*₁, during coiling of cable **402** in cable tank **100.** FIG. 5B corresponds to a second time, *t*₂, during coiling of cable **402** in cable tank **100,** where *t*₂>*t*₁*.*

Referring to FIG. 5A, by time *t*₁, the cable-coiling operation progressed to a cable configuration in which: (i) a complete spirally wound first layer **502** of cable **402** has been laid directly on the top surface of base **110;** and (ii) a partially completed, spirally wound second layer **504** of cable **402** has been laid directly on top of layer **502.** In this particular example, the first layer **502** is formed by placing an end section of cable **402** next to the outer wall **120** of cable tank **100** and then spirally winding the cable in the clockwise direction in quasi-circular, closely packed loops of gradually decreasing diameter toward the inner cylindrical wall **130** of the cable tank. Once a last loop **512** of layer **502** is laid next to wall **130,** a first loop **514** of layer **504** is wound in the clockwise direction about the inner cylindrical wall **130** on top of loop **512.** The spiral winding of cable **402** then proceeds in the clockwise direction, in quasi-circular, closely packed loops of gradually increasing diameter, toward the outer cylindrical wall **120** of cable tank **100.** At time *t*₁, a cable loop **518** is an edge cable loop of layer **504.** Around this time, cable-handling robots **350₁-350_{N}** may operate to engage different downed sections of cable **402** and shape the edge loop **518,** e.g., by pressing the respective engaged cable sections thereof against the preceding cable loop **516** to prevent uncoiling and to ensure relatively neat and tight packing of cable loops in layer **504.**

Referring to FIG. 5B, by time *t*₂, the cable-coiling operation progressed to a cable configuration in which: (i) layer **504** has been completed; and (ii) a partially completed, spirally wound third layer **506** of cable **402** has been laid directly on top of layer **504.** In this particular example, a first loop **522** of layer **506** is wound in the clockwise direction on top of a last loop **520** of layer **504.** The spiral winding of cable **402** then proceeds in the clockwise direction, in quasi-circular, closely packed loops of gradually decreasing diameter, toward the inner cylindrical wall **130** of cable tank **100.** At time *t*₂, a cable loop **526** is an edge cable loop of layer **506.** Around this time, cable-handling robots **350₁-350_{N}** may operate to engage different downed sections of cable **402** and shape the edge loop **526,** e.g., by pressing the respective engaged cable sections against the preceding cable loop **524** to prevent uncoiling and to ensure relatively neat and tight packing of cable loops in layer **506.**

Additional spirally wound, horizontal layers of cable **402** can be formed in the above-indicated manner to produce a vertical stack of spirally wound, horizontal layers of cable **402** in cable tank **110.** When in-line objects of a larger diameter, such as optical joints, are present, the corresponding layer disturbances can be reduced or corrected, e.g., using a suitable filler material, such as dunnage. Some objects of even larger diameter, such as optical amplifiers, may be stored outside cable tank **100,** e.g., as known to persons of ordinary skill in the pertinent art. In such cases, automated coiling may be briefly interrupted and then resumed after the corresponding in-line object is properly secured in the designated area. Some portions of the cable layers around disturbances caused by in-line objects may be tilted, i.e., have a sloped top surface.

The snapshots shown in FIGs. 5A-5B illustrate the ability of cable-handling robots **350₁-350_{N}** to press cable sections of the edge cable loop in two opposite radial directions. For example, in the snapshot of FIG. 5A, cable-handling robots **350₁-350_{N}** may be pressing cable sections of the edge loop, e.g., **518,** toward the center of cable tank **100.** In contrast, in the snapshot of FIG. 5B, cable-handling robots **350₁-350_{N}** may be pressing cable sections of the edge cable loop, e.g., **526,** toward the periphery of cable tank **100.**

FIG. 6 shows a schematic three-dimensional perspective view of a cable-handling robot **350ₙ** according to an embodiment. Robot **350ₙ** may have a weight between approximately 100 kg and 200 kg. Such weight enables robot **350ₙ** to properly handle cable **402** during the coiling operation, e.g., to steadily hold a section of the cable in place while new sections thereof are being lowered through cable-guiding head **430.** In an example embodiment, robot **350ₙ** may have the following approximate dimensions: 1 m width, 1 m length, and 1 m height.

Robot **350ₙ** comprises a body **610** having a plurality of (e.g., three or four) wheels **612** with tires, only two of which are directly visible in the view of FIG. 6. Each wheel **612** may be connected to a respective dedicated motor (not explicitly shown in FIG. 6). Each of the motors may be individually controllable to enable robot **350ₙ** to make turns or to move along a straight line. The tires of wheels **612** may have no grooves (i.e., may be slick) to avoid having trapped therein any foreign objects that might possibly damage cable **402,** e.g., when the wheels come into direct contact with the cable inside cable tank **100.** The tires of wheels **612** may preferably be made of a rubbery material capable of providing sufficient traction for robot **350ₙ** to move/stand, without slipping or skidding, on top of the cable layers described in reference to FIGs. 5A-5B.

Robot **350ₙ** further comprises arms **620₁** and **620₂** fixedly attached to body **610.** In an example embodiment, arms **620₁** and **620₂** may be horizontal and collinear, i.e., arranged to lie on a straight line passing through a middle portion of body **610.** Extending down from the arms are cable rakes **630₁** and **630₂.** Each of cable rakes **630₁** and **630₂** may be movable vertically, e.g., as indicated in FIG. 6 by the double-headed arrows. For example, in some embodiments, cable rakes **630₁** and **630₂** can be retracted into arms **620₁** and **620₂**, respectively, to enable robot **350ₙ** to more-freely move inside cable tank **100** without catching cable **402.** On the other hand, when a cable rake **620ᵢ** (i=1, 2) is lowered, that cable rake can be used to tackle and hook a downed section of cable **402.** In an example embodiment, cable rakes **630₁** and **630₂** may have suitable shapes and be covered with rubber or relatively soft plastic to prevent any possible damage to cable **402.**

Referring to FIG. 5B, when robot **350ₙ**. is working inside cable tank **100,** wheels 612 thereof may be on top of partially completed cable layer **506.** In this case, robot **350ₙ**. can position itself such that, for example, arm **620₂** extends over the edge of partially completed cable layer **506.** Cable rake **630₂** can then be lowered such that the bottom end thereof almost touches the top of the corresponding completed cable layer **504,** i.e., be lowered below the bottom level of wheels **612.** After cable rake **630₂** is lowered in this manner, robot **350ₙ** can move in the radial direction toward outer wall **120** such that the corresponding section of edge cable loop **526** is pulled by the cable rake into a desired position next to cable loop **524,** e.g., without any slack or other winding imperfections. Once that section of edge cable loop **526** is raked into a proper position, robot **350ₙ** can steadily hold it there for some time, e.g., until other sections of edge cable loop **526** are similarly raked in and secured by other robots to substantially lock the held section of cable loop **526** in place. At that time, robot **350ₙ** can retract cable rake **630₂** and back off from the edge of the partially completed cable layer **506** to allow new sections of cable **402** to be lowered next to the secured section of edge cable loop **526.** This process can then be repeated in the same manner to properly form a new edge cable loop next to cable loop **526.**

Alternatively, wheels **612** of robot **350ₙ**. may be on top of the fully completed cable layer **504.** In this case, robot **350ₙ** can position itself such that, for example, arm **620₁** does not extend over the edge of partially completed cable layer **506.** Cable rake **630₁** can then be lowered such that the bottom end thereof almost touches the top of cable layer **504,** i.e., be lowered to the level slightly above the bottom level of wheels **612.** After cable rake **630₁** is lowered in this manner, robot **350ₙ** can move in the radial direction toward outer wall **120** such that the corresponding section of edge cable loop **526** is pushed by the cable rake into a desired position next to cable loop **524,** e.g., without any slack or other winding imperfections. Once that section of edge cable loop **526** is raked into a proper position, robot **350ₙ** can steadily hold it there for some time, e.g., until other sections of edge cable loop **526** are similarly raked in and secured by other robots to substantially lock the held section of cable loop **526** in place. At that time, robot **350ₙ** can retract cable rake **630₁** and back off from the edge of partially completed cable layer **506** to allow new sections of cable **402** to be lowered next to the secured section of edge cable loop **526.** This process can then be repeated in the same manner to properly form a new edge cable loop next to cable loop **526.**

In some cases, robot **350ₙ** may need to move across the edge cable loop, e.g., to change its position from being located directly on top of fully completed layer **504** to being located directly on top of partially completed layer **506,** or *vice versa.* Wheels **612** may preferably have a sufficiently large diameter and good traction to enable robot **350ₙ** to "climb," up or down, the step corresponding to the edge cable loop **526.**

Referring back to FIG. 6, body **610** may have a plurality of on-board positioning sensors and/or cameras (not explicitly shown in FIG. 6).

For example, body **610** may have one or more positioning sensors to determine the position of robot **350ₙ**. inside cable tank **100.** In an example embodiment, such a positioning sensor may be implemented using an upward-facing camera. A ceiling above cable tank **100** may have painted thereon a reference pattern, which such camera may capture. The corresponding video frame can then be processed to determine the position of robot **350ₙ.** Wireless link **318** may then be used to communicate the determined position to electronic controller **310.**

In an alternative embodiment, a distinguishing pattern may be painted on top of body **610,** and downward-facing cameras may be installed at the ceiling above cable tank **100.** Image frames captured by such cameras may then be processed to determine positions of different robots **350ₙ** inside cable tank **100.**

Body **610** may further have one or more cable-reconnaissance sensors. In an example embodiment, such a cable-reconnaissance sensor may be implemented using a laser-based profilometer. A camera can be used, e.g., to distinguish different types and/or variants of cable **402.** For example, such camera can be used to spot various cable markers. Some of such cable markers may also be used to indicate the presence of in-line objects, such as joining boxes, repeaters, etc.

Body **610** may further have one or more safety sensors. Such sensors may be used, e.g., to detect the presence of humans within a safety range around robot **350ₙ.** Two areas may be defined around robot **350ₙ** a warning area and a "red" zone. When a person is detected within the warning area, robot **350ₙ** may inform operator **322,** e.g., by sending a warning message. If a person enters the red zone, then robot **350ₙ** may send an alarm message to operator **322.** In response to the latter message, operator **322** may perform an emergency stop of system **300.** Additionally, body **610** may have an emergency stop button thereon, which can be used if needed to cause an immediate shutdown of the corresponding robot **350ₙ.**

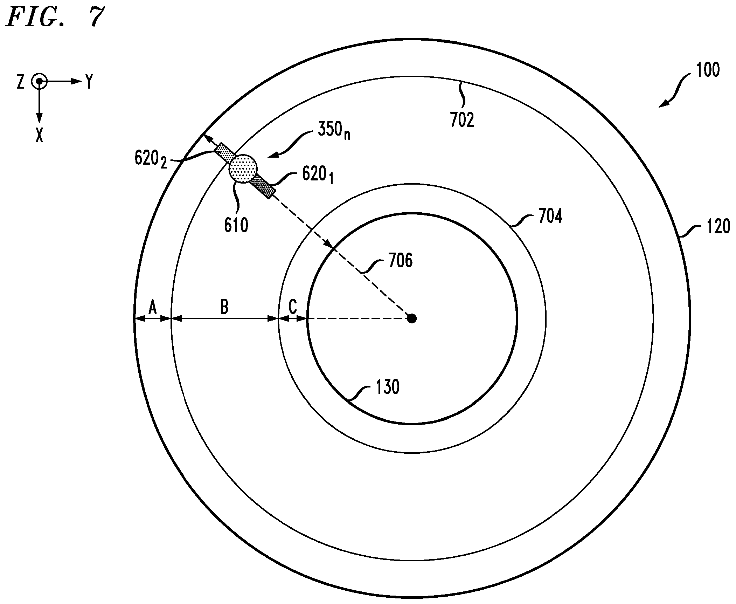

Body **610** may further have an easily accessible battery compartment for a replaceable battery pack. In an example embodiment, each battery pack may enable robot **350ₙ**. to operate for 8 to 12 hours. Low energy consumption may be achieved by limiting the movements of individual robots, e.g., as described in more detail below in reference to FIGs. 7-8. When necessary, a technician may perform battery-pack replacement for robot **350ₙ**. by briefly stopping the robot inside cable tank **100,** i.e., without taking the robot out of the cable tank.

FIG. 7 schematically shows different operating zones for robot **350ₙ**. in cable tank **100** according to an embodiment. More specifically, FIG. 7 shows a schematic top view of cable tank **100,** which is similar to the top view of FIG. 4. The floor of cable tank **100** is divided into three ring-shaped logical zones, labeled **A, B,** and **C,** respectively. Only one robot **350ₙ**. is shown in FIG. 7 for illustration purposes. However, the shown zones **A, B,** and **C** may similarly be applied to additional robots **350ₙ** in cable tank **100.**

Zone A is located between outer wall **120** and circle **702.** In an example implementation, the width of zone **A** may approximately be the same as or slightly larger than one half of the arms span of robot **350ₙ,** with the arms span being the distance between the unattached end of arm **620₁** and the unattached end of arm **620₂.** Zone **C** is located between inner wall **130** and circle **704.** The width of zone **C** may approximately be the same as the width of zone **A.** Zone **B** is located between circles **702** and **704.** Other suitable zone widths may alternatively be implemented as well.

In operation, robot **350ₙ** may typically be oriented such that its arms **620₁** and **620₂** are approximately along a corresponding radial line **706,** e.g., as indicated in FIG. 7. Most of the time, robot **350ₙ** may move in relatively small increments along radial line **706,** toward inner wall **130** and/or outer wall **120,** e.g., as explained in more detail below.

When cable **402** is being coiled in zone **A,** robot **350ₙ** may use arm **620₂** while body **610** primarily remains in zone **B.** More specifically, when the coiling is proceeding toward inner wall **130,** robot **350ₙ** may use arm **620₂** to push the downed cable section toward outer wall **120** and/or the previously laid cable loop. When the coiling is proceeding toward outer wall **120,** robot **350ₙ** may use arm **620₂** to pull the downed cable section toward the previously laid cable loop.

When cable **402** is being coiled in zone **C,** robot **350ₙ** may use arm **620₁** while body **610** primarily remains in zone **B.** More specifically, when the coiling is proceeding toward inner wall **130,** robot **350ₙ** may use arm **620₁** to pull the downed cable section toward the previously laid cable loop. When the coiling is proceeding toward outer wall **120,** robot **350ₙ** may use arm **620₁** to push the downed cable section toward inner wall **130** and/or the previously laid cable loop.

When cable **402** is being coiled in zone **B,** robot **350ₙ** may use either of the arms **620₁** and **620₂** to push or pull the downed cable section toward the previously laid cable loop.

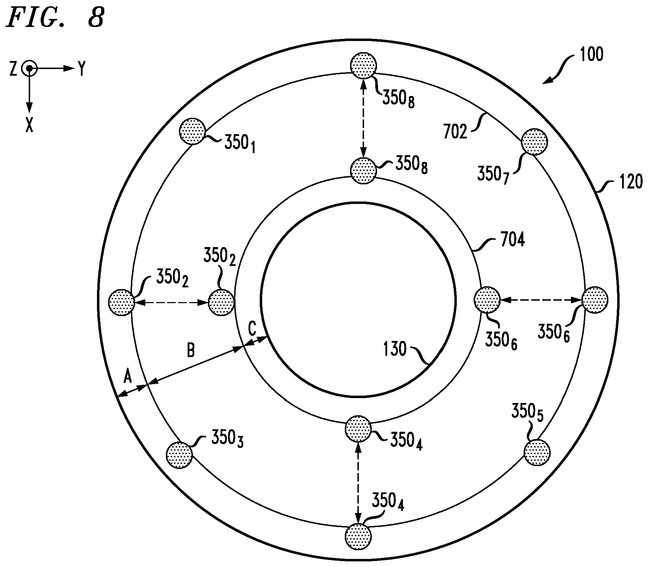

FIG. 8 schematically illustrates a variable number of robots **350ₙ** that may be actively engaged in cable coiling in cable tank **100** according to an embodiment. More specifically, FIG. 8 shows a schematic top view of cable tank **100,** which is similar to the top view of FIG. 7. As shown, there are eight robots, labeled **350₁-350₈**, deployed in cable tank **100.** Arms **620** of the robots **350₁-350₈** are not explicitly shown in FIG. 8 for simplification.

When cable **402** is being coiled in or close to zone **A,** all eight of the robots **350₁**-**350₈** may be actively engaged in cable coiling, e.g., as described above. When cable **402** is being coiled in or close to zone **C,** only four of the robots **350₁-350₈,** illustratively the robots **350₂, 350ₙ, 350₆,** and **350₈,** may be actively engaged in cable coiling, while the remaining robots, illustratively the robots **350₁, 350₃, 350₅,** and **350₇,** may be idling, e.g., near outer wall **120.** In an example embodiment, some of the **350₁-350₈** may be controllably engaged/disengaged from the active cable coiling to maintain the distance between neighboring active robots in the range between approximately 2 m and approximately 4 m.

Typically, coiling on larger circles in zones **A** and **B** may rely on a larger number of robots **350ₙ,** whereas coiling on smaller circles in zones **B** and **C** may rely on a smaller number of robots **350ₙ.** An appropriate robot-management algorithm run by electronic controller **310** may be used to instruct selected robots **350ₙ** to either get involved in the cable-coiling operations or to sit idle outside the active cable-coiling area. The robot-management algorithm may take into account the remaining charge in the batteries of various robots **350ₙ** to alternate the robots used for coiling on the smaller circles in zones **B** and **C,** e.g., such that the usage time of different individual robots is approximately equalized.

In an example embodiment, system **300** may use appropriate software with different modules thereof running on electronic controller **310** and on-board controllers of individual robots **350ₙ** to orchestrate cooperative work of the robots and other parts of the system. The software may be used to implement at least the following phases:
(i) initialization; (ii) normal operation; and (iii) charging.

During the initialization phase, system **300** may be operated to:
(a) Activate of cable-guiding sub-system **340.** For example, operators may prepare the system by threading cable **402** through cable-guiding head **430** and placing several initial cable loops on the tank floor under manual control. The operators may also test cable engine **330** and communications between various parts of system **300;**
(b) Deploy cable-handling robots **350ₙ**. in cable tank **100.** For example, technicians may place a selected number of robots **350ₙ** on the floor of cable tank **100.** The number of robots may depend on the diameter *D* of cable tank **100.** The robots may be placed inside cable tank **100** using a gantry crane or other suitable mechanism;
(c) Connect the deployed cable-handling robots **350ₙ** to electronic controller **310.** For example, operator **322** may enter into the system the number of deployed robots **350ₙ** and their unique identifiers. Electronic controller **310** may then establish and test wireless links **318** with individual robots **350₄.** The established wireless links **318** may then be used to log into electronic controller **310** the present positions of individual robots **350ₙ** on the floor of cable tank **100;** and
(d) Move the deployed cable-handling robots **350ₙ** to their appropriate initial positions. For example, a suitable algorithm may be run to determine an initial working position for each robot **350ₙ** and then send corresponding positioning commands to the robots via wireless links **318.**

The initialization phase may be deemed completed, e.g., when: (i) each robot **350ₙ**. is at its initial working position and is ready to operate, e.g., there are no warnings or alarms, the battery is sufficiently charged, and the communication channel is working properly; (ii) cable guiding sub-system **340** is ready, e.g., the power is on, the corresponding communication channels are on, the catenary shape is within acceptable limits, and cable tension is normal; and (iii) cable engine **330** is ready. When operator **322** gives the start order, the initial cable speed may be relatively low, e.g., approximately 10 m/min. The cable speed may then be gradually increased to a desired normal operating speed, e.g., to >20 m/min. If the normal operating speed is reached without warnings, alarms, or other issues, then system **300** may transition to the "normal operation" phase.

During the "normal operation" phase, system **300** may:
(e) Maintain proper operation of cable-guiding sub-system **340.** For example, cable-positioning sensors **432. 434** may be used to monitor the catenary shape of the hanging section of cable **402** and trigger appropriate adjustments. If the catenary shape gets too close to its acceptable limits, then electronic controller **310** may correspondingly adjust the trajectory and/or speed of cable-guiding head **430.** If this adjustment is insufficient to recover the acceptable catenary shape, then electronic controller **310** may instruct cable engine **330** to change (increase or decrease) the linear speed of cable **402.** In some cases, human intervention and/or an emergency stop may be needed to address and correct a catenary-shape issue;
(f) Individually control different robots **350ₙ.** For example, robots **350ₙ** may need to behave differently in different coiling zones (e.g., zones **A-C,** FIGs. 7-8), e.g., to push or pull downed sections of cable **402** as indicated above. Taking into account the specific coiling zone, orchestrated cooperative actions of multiple robots **350ₙ** may be implemented in accordance with the following example cyclical sequence of steps: (i) the robot closest to the cabletouchdown area operates to: tackle the corresponding cable section with a suitable one of the arms **620₁** and **620₂,** push or pull the tackled cable section into a proper loop position using the corresponding rake **630₁** or **630₂,** and hold that cable section steady and in place for a suitable period of time; (ii) one or more of the robots **350ₙ** preceding the robot of "step (i)" may continue holding their respective cable sections steady, in their proper coiled positions; and (iii) the remaining robots **350ₙ,** i.e., the robots whose cable sections are sufficiently stabilized by the actions of the robots involved in "steps (i)-(ii)," may gradually move out of the cable-drop path to allow new sections of the cable to be lowered and to touch down;
(g) Control the number of active robots **350ₙ**. For example, the number of robots needed for cable coiling in zone **C** may typically be smaller than the number of robots needed for cable coiling in zone **A** (e.g., see FIG. 8). Accordingly, electronic controller **310** may instruct some of the robots to temporarily park themselves along outer wall **120,** out of the cable-drop path. The selection of robots to be parked in this manner may be based on the remaining battery charge. More specifically, the robots with relatively low remaining charges may be temporarily parked, while the robots with relatively high remaining charges may continue to be active; and
(h) Control cable engine **330.** For example, proper linear speed of cable **402** may depend on the cable type and on the type of coiling, e.g., initial, intermediate, transfer, or final. The linear speed of cable **402** may also depend on the cable-coiling zone, e.g., with a higher speed in zone **A** than in zone **C** (also see FIGs. 7-8). Electronic controller **310** may therefore run a suitable speed-control algorithm, which takes into account these and possibly other parameters of the cable-coiling process.

Various elements of system **300** (e.g., robots **350ₙ,** cable-guiding sub-system **340,** cable engine **330,** electronic controller **310,** and operator **322)** may cause electronic controller **310** to implement an emergency stop at any time. Some of the reasons for an emergency stop may include but are not limited to: (i) presence of humans in the red zone around any one of the active robots **350ₙ;** (ii) entangled cable; (iii) cable tension exceeding a fixed threshold; (iv) unacceptable catenary shape; (v) one of the robots **350ₙ**. is in the cable-drop path; (vi) loss of communications with any critical element of the system; (vii) a manually entered command from operator **322;** and (viii) activation of the emergency stop button on any of robots **350ₙ.**

When the coiling operation is halted or terminated, some or all of robots **350ₙ** may be lifted out of cable tank **100.** If charging is needed, some robots **350ₙ** may be directed to a charging station. For example, those robots **350ₙ,** still being connected to electronic controller **310,** may be instructed to proceed to a selected one of the available batterycharging stations for battery replenishment. To facilitate safe transit thereto, dedicated robot-transit paths may be established on the factory floor. The robot-transit speed may be limited, e.g., to <3 km/h. The charged robots may then move along the same paths back to cable tank **100** and be transferred into the cable tank for further cable-coiling operations therein.

According to the invention disclosed above, e.g., in the summary section and/or in reference to any one or any combination of some or all of FIGs. 1-8, provided is an apparatus comprising: a movable head (e.g., **430,** FIG. 4) to guide a hanging section of a cable (e.g., **402,** FIG. 4); a plurality of movable robots (e.g., **350ₙ,** FIG. 4), each of the robots having one or more rakes (e.g., **630₁, 630₂,** FIG. 6) for moving downed sections of the cable; and an electronic controller (e.g., **310,** FIG. 3) to coordinate movements of the movable head and individual ones of the robots to coil the cable in spirally wound, vertically stacked, horizontal layers (e.g., **502-506,** FIG. 5B).

In some embodiments of the above apparatus, the apparatus further comprises: first and second parallel stationary rails (e.g., **410₁**, **410₂**, FIG. 4); and a third rail (e.g., **420,** FIG. 4) mounted on and translatable along the first and second parallel stationary rails; and wherein the movable head is mounted on and translatable along the third rail.

In some embodiments of any of the above apparatus, the apparatus further comprises a cable tank (e.g., **100,** FIG. 4) to hold the spirally wound, vertically stacked, horizontal layers of the cable.

In some embodiments of any of the above apparatus, the cable tank comprises a circular horizontal base (e.g., **110,** FIG. 1) and outer and inner walls (e.g., **120, 130,** FIG. 1) attached to the base; and wherein the robots are positioned to move in the cable tank between the outer and inner walls.

In some embodiments of any of the above apparatus, the apparatus further comprises one or more sensors (e.g., **432. 434,** FIG. 4) to monitor catenary shape of the hanging section.

In some embodiments of any of the above apparatus, at least one of the one or more sensors is mounted on the movable head.

In some embodiments of any of the above apparatus, the electronic controller is configured to adjust movements of the movable head in response to monitoring data received from the one or more sensors.

In some embodiments of any of the above apparatus, the movable head and robots are operable, in communication with the electronic controller, to coil at least 1000 km of the cable in the spirally wound, vertically stacked, horizontal layers.

In some embodiments of any of the above apparatus, the individual ones of the robots are configured to communicate with the electronic controller via respective wireless links (e.g., **318,** FIG. 3).

In some embodiments of any of the above apparatus, the apparatus further comprises an engine (e.g., **330,** FIG. 3) to feed sections of the cable to the movable head.

In some embodiments of any of the above apparatus, the cable comprises one or more optical fibers.

In some embodiments of any of the above apparatus, the cable is a submarine communications cable.

According to the invention disclosed above, e.g., in the summary section and/or in reference to any one or any combination of some or all of FIGs. 1-8, provided is also an automated cable-coiling method, comprising the steps of: guiding a hanging section of a cable (e.g., **402,** FIG. 4) using a movable head (e.g., **430,** FIG. 4); moving downed sections of the cable using rakes (e.g., **630₁, 630₂,** FIG. 6) of a plurality of movable robots (e.g., **350ₙ,** FIG. 4); and coordinating movements of the movable head and individual ones of the robots using an electronic controller (e.g., **310,** FIG. 3) to coil the cable in spirally wound, vertically stacked, horizontal layers (e.g., **502-506,** FIG. 5B).

In some embodiments of the above method, the method further comprises holding the spirally wound, vertically stacked, horizontal layers of the cable in a cable tank (e.g., 100, FIG. 4).

While this disclosure includes references to illustrative embodiments, this specification is not intended to be construed in a limiting sense. Various modifications of the described embodiments, as well as other embodiments may lie within the scope of the following claims.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. An apparatus, comprising:
a movable head (430) to guide a hanging section of a cable (402);
**characterized in that** the apparatus comprises:
a plurality of movable robots (350ₙ), each of the robots having one or more rakes (630₁, 630₂) for moving downed sections of the cable; and
an electronic controller (310) to coordinate movements of the movable head and individual ones of the robots to coil the cable in spirally wound, vertically stacked, horizontal layers (502-506).

2. The apparatus of claim 1, further comprising:
first and second parallel stationary rails (410₁, 410₂); and
a third rail (420) mounted on and translatable along the first and second parallel stationary rails; and
wherein the movable head is mounted on and translatable along the third rail.

3. The apparatus of any one of claims 1 and 2, wherein each individual one of the robots is operable to horizontally push or pull the downed sections of the cable using the one or more rakes thereof.

4. The apparatus of any one of claims 1, 2, and 3, further comprising a cable tank (100) to hold the spirally wound, vertically stacked, horizontal layers of the cable.

5. The apparatus of claim 4,
wherein the cable tank comprises a circular horizontal base (110) and outer and inner walls (120, 130) attached to the base; and
wherein the robots are positioned to move in the cable tank between the outer and inner walls.

6. The apparatus of any one of claims 1, 2, 3, and 4, further comprising one or more sensors (432, 434) to monitor catenary shape of the hanging section.

7. The apparatus of claim 6, wherein at least one of the one or more sensors is mounted on the movable head.

8. The apparatus of claim 6, wherein the electronic controller is configured to adjust movements of the movable head in response to monitoring data received from the one or more sensors.

9. The apparatus of any one of claims 1, 2, 3, 4, and 6, wherein the movable head and robots are operable, in communication with the electronic controller, to coil at least 1000 km of the cable in the spirally wound, vertically stacked, horizontal layers.

10. The apparatus of any one of claims 1, 2, 3, 4, 6, and 9, wherein the individual ones of the robots are configured to communicate with the electronic controller via respective wireless links (318).

11. The apparatus of any one of claims 1, 2, 3, 4, 6, 9, and 10, further comprising an engine (330) to feed sections of the cable to the movable head.

12. The apparatus of any one of claims 1, 2, 3, 4, 6, 9, 10, and 11, wherein the cable comprises one or more optical fibers.

13. The apparatus of any one of claims 1, 2, 3, 4, 6, 9, 10, and 11, wherein the cable is a submarine communications cable.

14. An automated cable-coiling method, comprising:
guiding a hanging section of a cable (402) using a movable head (430);
moving downed sections of the cable using rakes (630₁, 630₂) of a plurality of movable robots (350ₙ); and
coordinating movements of the movable head and individual ones of the robots using an electronic controller (310) to coil the cable in spirally wound, vertically stacked, horizontal layers (502-506).

15. The method of claim 14, further comprising holding the spirally wound, vertically stacked, horizontal layers of the cable in a cable tank (100).

## Patentansprüche

1. Vorrichtung, umfassend:
einen beweglichen Kopf (430) zum Führen eines hängenden Abschnitts eines Kabels (402);
**dadurch gekennzeichnet, dass** die Vorrichtung Folgendes umfasst:
eine Vielzahl von beweglichen Robotern (350ₙ), wobei jeder der Roboter einen oder mehrere Rechen (630₁, 630₂) zum Bewegen heruntergelassener Abschnitte des Kabels aufweist; und
eine elektronische Steuereinrichtung (310) zum Koordinieren der Bewegungen des beweglichen Kopfes und einzelner Roboter, um das Kabel in spiralförmig gewundenen, vertikal gestapelten, horizontalen Lagen (502-506) aufzuwickeln.

2. Vorrichtung nach Anspruch 1, ferner umfassend:
eine erste und eine zweite parallele stationäre Schiene (410₁, 410₂); und
eine dritte Schiene (420), die auf der ersten und der zweiten parallelen stationären Schiene montiert und entlang dieser verschiebbar ist; und
wobei der bewegliche Kopf auf der dritten Schiene montiert und entlang dieser verschiebbar ist.

3. Vorrichtung nach einem der Ansprüche 1 und 2, wobei jeder einzelne der Roboter so betreibbar ist, dass er die heruntergelassenen Abschnitte des Kabels unter Verwendung des einen oder der mehreren Rechen horizontal schiebt oder zieht.

4. Vorrichtung nach einem der Ansprüche 1, 2 und 3, die ferner einen Kabelbehälter (100) zum Halten der spiralförmig gewundenen, vertikal gestapelten, horizontalen Lagen des Kabels umfasst.

5. Vorrichtung nach Anspruch 4,
wobei der Kabelbehälter eine kreisförmige horizontale Basis (110) und eine Außenwand (120) und eine Innenwand (130) umfasst, die an der Basis befestigt sind; und
wobei die Roboter so positioniert sind, dass sie sich in dem Kabelbehälter zwischen der Außenwand und der Innenwand bewegen können.

6. Vorrichtung nach einem der Ansprüche 1, 2, 3 und 4, die ferner einen oder mehrere Sensoren (432, 434) zum Überwachen der Kettenform des hängenden Abschnitts umfasst.

7. Vorrichtung nach Anspruch 6, wobei mindestens einer der einen oder mehreren Sensoren an dem beweglichen Kopf angebracht ist.

8. Vorrichtung nach Anspruch 6, wobei die elektronische Steuereinrichtung so konfiguriert ist, dass sie die Bewegungen des beweglichen Kopfes in Reaktion auf die von dem einen oder den mehreren Sensoren empfangenen Überwachungsdaten anpasst.

9. Vorrichtung nach einem der Ansprüche 1, 2, 3, 4 und 6, wobei der bewegliche Kopf und die Roboter in Verbindung mit der elektronischen Steuereinrichtung betreibbar sind, um mindestens 1000 km des Kabels in spiralförmig gewundenen, vertikal gestapelten, horizontalen Lagen aufzuwickeln.

10. Vorrichtung nach einem der Ansprüche 1, 2, 3, 4, 6 und 9, wobei die einzelnen Roboter so konfiguriert sind, dass sie über jeweilige drahtlose Verbindungen (318) mit der elektronischen Steuereinrichtung kommunizieren können.

11. Vorrichtung nach einem der Ansprüche 1, 2, 3, 4, 6, 9 und 10, die ferner einen Motor (330) zum Zuführen von Abschnitten des Kabels zu dem beweglichen Kopf umfasst.

12. Vorrichtung nach einem der Ansprüche 1, 2, 3, 4, 6, 9, 10 und 11, wobei das Kabel eine oder mehrere optische Fasern umfasst.

13. Vorrichtung nach einem der Ansprüche 1, 2, 3, 4, 6, 9, 10 und 11, wobei das Kabel ein Unterwasser-Kommunikationskabel ist.

14. Automatisiertes Kabel-Aufwickelverfahren, umfassend:
das Führen eines hängenden Abschnitts eines Kabels (402) unter Verwendung eines beweglichen Kopfes (430);
das Bewegen heruntergelassener Abschnitte des Kabels unter Verwendung von Rechen (630₁, 630₂) einer Vielzahl von beweglichen Robotern (350ₙ); und
das Koordinieren der Bewegungen des beweglichen Kopfes und einzelner Roboter unter Verwendung einer elektronischen Steuereinrichtung (310), um das Kabel in spiralförmig gewundenen, vertikal gestapelten, horizontalen Lagen (502-506) aufzuwickeln.

15. Verfahren nach Anspruch 14, ferner umfassend das Halten der spiralförmig gewundenen, vertikal gestapelten, horizontalen Lagen des Kabels in einem Kabelbehälter (100).

## Revendications

1. Appareil, comprenant :
une tête mobile (430) pour guider une section d'accrochage d'un câble (402) ;
**caractérisé en ce que** l'appareil comprend :
une pluralité de robots mobiles (350ₙ), chacun des robots présentant un ou plusieurs râteaux (630₁, 630₂) pour déplacer des sections tombées du câble ; et
un dispositif de commande électronique (310) pour coordonner les déplacements de la tête mobile et des robots individuels du groupe de robots pour enrouler le câble en couches horizontales (502-506), empilées à la verticale et enroulées en spirale.

2. Appareil selon la revendication 1, comprenant en outre :
des premier et deuxième rails fixes parallèles (410₁, 410₂) ; et
un troisième rail (420) monté sur les premier et deuxième rails fixes parallèles et pouvant se déplacer le long de celui-ci ; et
dans lequel la tête mobile est montée sur le troisième rail et peut se déplacer le long de celui-ci.

3. Appareil selon l'une quelconque des revendications 1 et 2, dans lequel chaque robot individuel du groupe de robots sert à pousser ou tirer horizontalement les sections tombées du câble à l'aide de ses un ou plusieurs râteaux.

4. Appareil selon l'une quelconque des revendications 1, 2 et 3, comprenant en outre un réservoir (100) de câble pour contenir les couches horizontales du câble, empilées à la verticale et enroulées en spirale.

5. Appareil selon la revendication 4,
dans lequel le réservoir de câble comprend une base horizontale circulaire (110) et des parois externe et externe (120, 130) attachées à la base ; et
dans lequel les robots sont positionnés pour se déplacer dans le réservoir de câble entre les parois externe et interne.

6. Appareil selon la revendication 1, 2, 3 et 4, comprenant en outre un ou plusieurs capteurs (432, 434) pour surveiller la forme caténaire de la section d'accrochage.

7. Appareil selon la revendication 6, dans lequel au moins l'un des un ou plusieurs capteurs est monté sur la tête mobile.

8. Appareil selon la revendication 6, dans lequel le dispositif de commande électronique est configuré pour régler les déplacements de la tête mobile en réponse à des données de surveillance reçues en provenance des un ou plusieurs capteurs.

9. Appareil selon l'une quelconque des revendications 1, 2, 3, 4 et 6, dans lequel la tête mobile et les robots servant, en communication avec le dispositif de commande électronique, à enrouler au moins 1000 km du câble dans les couches horizontales, empilées à la verticale et enroulées en spirale.

10. Appareil selon l'une quelconque des revendications 1, 2, 3, 4, 6 et 9, dans lequel les robots individuels du groupe de robots sont configurés pour communiquer avec le dispositif de commande électronique via des liaisons sans fil (318) respectives.

11. Appareil selon l'une quelconque des revendications 1, 2, 3, 4, 6, 9 et 10, comprenant en outre un moteur (330) pour acheminer des sections du câble jusqu'à la tête mobile.

12. Appareil selon l'une quelconque des revendications 1, 2, 3, 4, 6, 9, 10 et 11, dans lequel le câble comprend une ou plusieurs fibres optiques.

13. Appareil selon l'une quelconque des revendications 1, 2, 3, 4, 6, 9, 10 et 11, dans lequel le câble est un câble de communication sous-marin.

14. Procédé d'enroulement de câble automatisé, comprenant :
le guidage d'une section d'accrochage d'un câble (402) à l'aide d'une tête mobile (430) ;
le déplacement des sections tombées du câble à l'aide de râteaux (630₁, 630₂) d'une pluralité de robots mobiles (350ₙ) ; et
la coordination des déplacements de la tête mobile et des robots individuels du groupe de robots à l'aide d'un dispositif de commande électronique (310) pour enrouler le câble en couches horizontales (502-506), empilées à la verticale et enroulées en spirale.

15. Procédé selon la revendication 14, comprenant en outre le maintien des couches horizontales, empilées à la verticale et enroulées en spirale dans un réservoir (100) de câble.
